# EUROPEAN PATENT APPLICATION

(11) **EP 1 168 714 A2**
(43) Date of publication of application: **02.01.2002**
(21) Application number: 01111580.5
(22) Date of filing: 11.05.2001
(51) Int. Cl.: H04L 12/28, H04L 12/46

(54) **Redundant channels over a packet network**

(30) Priority: 27.06.2000 US 604128
(71) Applicant: Rockwell Electronic Commerce Corporation, Corporation of the State of Delaware, Wood Dale, Illinois 60191 (US)
(72) Inventor: Swardstrom, Paul D., Naperville, Illinois 60563 (US); Hollatz, Michael C., Huntley, Illinois 60142 (US)
(74) Representative: Reinhard - Skuhra - Weise & Partner

(57) **Abstract**

Method and apparatus for providing redundant channels over a local area network. Network redundant packet endpoints each provides two independent interfaces connecting with separate packet switching nodes. Each of the packet switching nodes can connect independently with separate high-speed backbone networks.

## Description

### BACKGROUND AND SUMMARY

The present invention relates to channels over a packet network that carry real-time data, such as audio, video or simulation data, minimize the chance of losing a contact/connection and enhance the quality of service (QoS) of the connection.

In a packet network, a single message is often divided into many data packets which are tagged with destination labels and sequence numbers, and passed on electronic communication paths using equipment and/or software well known in the art. The receiving system uses the data by examining packet tags (typically identifying the packets as being part of the same message and identifying a sequence number), frequently performing a check of data integrity such as a checksum, and reassembling the packets into the original message. The receiving system uses equipment and/or software well known in the art.

Unlike transmission of a message through a circuit switched system, different packets of a single message may be transmitted through different paths in a packet network. The transmission times of individual packets of the same message can vary for different reasons, such as paths of different lengths, delays in packet buffers awaiting availability of the next link, or the necessity of passing through different switches. Packets can arrive out of order and there can be variable delays in reassembling a message. Generally, this is not a problem in connection with the transmission of normal data.

However, the quality of real-time data, such as voice or video, is very dependent on its presentation as an uninterrupted stream. The RTP (real-time transport protocol) of the IETF (Internet Engineering Task Force) is an example of a protocol currently used to support the transport of real-time data over packet networks. The QoS in connection with the transmission of such real-time data can be impaired by the variable delays which can be inherent in a packet network. The present invention relates to enhancing the QoS over a Local Area Network (LAN), by using redundant paths to increase the likelihood of regular and reliable transmission through the network without variable delays.

One example of such a LAN could be in connection with an automatic contact distribution (ACD) system. In general, ACD systems are used to distribute telephone calls and other customer contacts among a group of agents of an organization. However, ACD systems may be used to distribute contacts under any of a number of different formats. For example, a contact may be a telephone call received from (or placed through) a public switched telephone network (PSTN) or a contact may be a voice path based upon packet data transferred through a network. Alternatively, a contact may be any communication such as an e-mail, a facsimile, a video, or a web-site inquiry received through the Internet, etc. Thus, ACD systems are transaction processing systems which can handle one or more of a wide variety of these contact types.

An organization can disseminate one or more telephone numbers, URLs or e-mail addresses, for example, to customers and to the public in general as a means of contacting the organization. As contacts are directed to the organization, for example from the PSTN or the Internet, the ACD system can direct the contacts to the organization's agents based upon some algorithm. For example, where all agents are considered equal, the ACD may distribute a contact based on which agent has been idle the longest time. Of course, there are many other known ways to select an agent, or a subgroup of agents from whom an available one will be selected.

The ACD system can be provided with any number of routing mechanisms for establishing contact paths between agent stations and sources of contacts. In some systems, a path may be established through a circuit switched voice port. In another example, a path may be a data link, such as over a LAN.

Control of the switching and communications with a database and with an external network such as a PSTN may, for example, be accomplished generally as described in U.S. Pat. Nos. 5,268,903 and 5,140,611, both to Jones et al. which are hereby incorporated by reference. Routing of contacts to agents may, for example, be accomplished generally as described in U.S. Pat. No. 5,335,269 to Steinlicht, U.S. Pat. No. 5,365,581 to Baker et al., and U.S. Pat. No. 5,400,327 to Dezonno, which are hereby incorporated by reference.

In general, when an ACD system detects a contact, it assigns resources, and in some instances creates a connection with an agent station, and presents the contact to the agent. Once the agent has answered the contact, it is important to retain a communications path between the agent station and the source of the contact until the contact is completed. However, problems such as software errors or equipment failures could render the path useless. Therefore, it is desirable to be able to retain the communication via an alternate path, to be able to regenerate a connection with the agent station if an initial connection is lost, to design the system to minimize lost contacts, and to enhance the QoS of transmissions of real-time data through a packet network by minimizing the impact of lost or delayed packets. This is equally true of any packet network carrying real-time data.

A traditional circuit switched system provides redundant processing and voice switching capabilities, but new techniques must be used for a packet network. In very large packet networks, redundant paths and rerouting capabilities are currently available. They work well enough for normal data over a network such as the Internet, where missing packets often can be recovered from the source end point. However, as discussed above, the transmission of real-time data can be distorted and the QoS diminished when packets are lost or delayed.

In addition, large packet networks will use very expensive fault tolerant equipment along with the capability of re-routing around failed equipment. However, for a site located in a single building or a campus environment connected via a LAN using commercial off-the-shelf switched hubs, the use of these fault tolerant switches is too expensive.

In accordance with the present invention, a redundant packet network channel is made available down to a network endpoint. Such an endpoint linking with the network through a redundant channel (in addition to an initial channel) is referred to as a "redundant packet endpoint" or "RPE." In one embodiment, each RPE provides two independent interfaces connecting with separate packet switching nodes, and each of the packet switching nodes can connect independently with separate high-speed backbone networks. In other words, redundant, but off-the-shelf, equipment is used, and it is used all the way down to the packet network endpoints. The redundancy reduces the possibility of data being lost or distorted due to system failures. In communications involving real-time data, there is better transmission due to the reduction of missing or delayed packets.

The features of the present invention which are believed to be novel are set forth below with particularity in the appended claims. The invention, together with further advantages thereof, may be understood by reference to the following description in conjunction with the accompanying figure, which illustrates an embodiment of the invention.

### BRIEF DESCRIPTION OF THE DRAWINGS

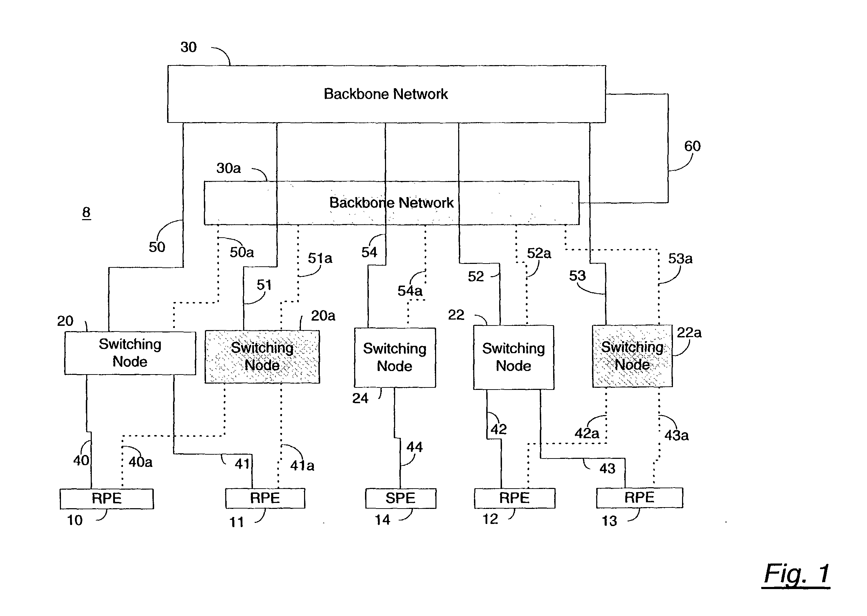

Figure **1** is a block diagram illustrating an example of providing redundant channels over a packet network.

### DETAILED DESCRIPTION

Figure **1** illustrates an example of a packet network **8** providing redundant channels. Figure **1** shows two types of packet network endpoints: simple packet endpoint (SPE) **14** and redundant packet endpoints (RPE) **10, 11, 12,** and **13.** RPE is labelled as a "redundant" endpoint only to distinguish it from an SPE in the illustration of Figure **1.** That is, for the purpose of describing endpoints, "redundant" is not used to indicate an extra endpoint but to indicate that, on the network side, an RPE (**10, 11, 12, 13)** is linked to network **8** through redundant channels and an SPE **(14)** is linked to network **8** through a single channel, as seen in Figure **1.** For example, RPE **10** provides interfaces **40** and **40a** to switching nodes **20** and **20a,** respectively.

The packet network endpoints are gateways through which a connection can be made with the network **8.** For example, such a connection can be with an agent station or with a source of a contact in the case of an ACD system LAN. There can be any number of packet network endpoints and, simply as an illustration, Figure **1** shows SPE **14** and RPEs **10, 11, 12,** and **13.**

A gateway is an entrance/exit to a communications network. For example, it can intercept a contact from a public internet and direct it to a LAN, or from a personal computer of an agent to a LAN. A gateway could be a node connecting two networks which use different protocols and, in some embodiments, could perform the necessary conversion. It can be a transition point between a packet switched network and a circuit switched network.

In one embodiment, an SPE (**14**) can be associated with a single source or destination, but an RPE (**10, 11, 12, 13**) can be associated with multiple sources and/or destinations outside of the network **8** which can be the economic justification for the redundancy.

In the example of Figure **1**, each RPE (**10, 11, 12,** and **13**) provides two independent packet based interfaces (**40** and **40a, 41** and **41a, 42** and **42a, 43** and **43a**), respectively. Many suitable interfaces are known in the art. Examples of possible interfaces include 10Base-T, 100BaseTX, T1/E1 or T3 for Frame Relay or ATM (asynchronous transfer mode). The two independent interfaces provided by an RPE (such as **40** and **40a** of RPE **10**) each connects to a separate packet switching node such as a local area network switched hub (**20** and **20a** or **22** and **22a** in the example of Figure 1). In another embodiment, there could be separate interfaces provided by an RPE (such as **10)** to any one switching node (such as **20**).

In the example of Figure **1,** switching node **20a** is redundant with switching node **20.** Node **20a** connects with the same RPEs (**10** and **11** in the illustration of Figure **1)** as does node **20.** Node **20a** connects with those RPEs **10** and **11** via alternate interfaces **(40a** and **41a,** respectively, in the illustration of Figure **1)** as does node **20 (40** and **41,** respectively, in the illustration of Figure **1).** Similarly, in the illustration of Figure **1,** switching node **22a** is redundant with switching node **22,** and connects with the same RPEs **(12** and **13)** via alternate interfaces **(42a** and **43a** rather than **42** and **43).**

Figure **1** is merely for illustrative purposes, and any switching node (such as **20)** could connect with more endpoints than simply with RPEs **10** and **11.** Furthermore, it is not necessary that two switching nodes (such as **20** and **20a**), which each connect with a common endpoint (such as RPE **10**), each connect with all of the same endpoints. For example, switching node **20,** which connects with RPE **10** as does switching node **20a,** also could connect with other RPEs to which switching node **20a** did not connect, and/or it could connect to one or more SPEs to which switching node **20a** did not connect.

In the example of Figure **1,** SPE **14** is connected to a single switching node **24** via a single interface **44.** Again, Figure **1** is merely for illustrative purposes, and switching node **24** could connect with more endpoints than simply with SPE **14.** The single node **24** and interface **44** are illustrated in the example of Figure **1** because the expense of redundancy may not be justified for all circumstances. In one embodiment, failure of interface **44** would involve the loss of only one contact. Similarly, failure of switching node **24** may involve the loss of a limited number of contacts, and the risk of that loss may not justify the redundancy. On the other hand, if an RPE (**10, 11, 12, 13**) is associated with multiple sources and/or destinations outside of the network **8**, the possibility of a failure causing the loss of many contacts would be a more serious failure. Therefore, there would be a greater need for redundancy in order to minimize any loss of contacts.

Each switching node **(20, 20a, 22, 22a,** and **24)** in the illustrated embodiment of Figure **1** can connect to other equipment (not shown), but also can connect to each of two high-speed backbone networks **(30** and **30a)** via appropriate links **(50** and **50a, 51** and **51a, 52** and **52a, 53** and **53a,** and **54** and **54a,** respectively). Each backbone network **30** and **30a** could be based, for example, on 100Base-TX, 1000Base-FX, ATM, other technologies, or a combination of technologies. In another embodiment, there could be separate links between any packet switching node (such as **20**) and any one high-speed backbone network (such as **30**).

In the embodiment illustrated by Figure **1,** each RPE (**10, 11, 12, 13**) provides independent interfaces connecting with each of two switching nodes, and each switching node (**20, 20a, 22, 22a,** and **24**) connects with each of two backbone networks (**30** and **30a**) via independent links. This optimal cross-linking improves path reliability, allowing for recovery of some double faults because of the availability of four possible paths between each RPE (**10, 11, 12, 13**) and a backbone network (**30** or **30a**). For example, RPE 10 could still be connected to a backbone network **(30** in this example) via interface **40a** and link **51,** even if switching node **20** and link **51a** both failed. In one embodiment, illustrated by the example of Figure **1,** the reliability is further enhanced by connection **60** of the two backbone networks **30** and **30a,** allowing for recovery of some additional double faults.

In one embodiment, when a communication contact is presented to an RPE (**10, 11, 12,** or **13** in the illustration of Figure **1**), a communication path with another RPE or with an SPE **14** can be established through one of the alternate channels available. For example, between RPE **10** and RPE **13,** a path could be established via interface **40,** node **20,** link **50,** backbone network **30,** link **52,** node **22,** and interface **43.** The packets for the contact could be routed over the chosen path. If the connection failed over the initial path which was established, such as because of an equipment failure, then RPE **10** could reconnect with RPE **13** via the another available channel. For example, redundant equipment could be used to establish an alternate path via interface **40a,** node **20a,** link **51a,** backbone network **30a,** link **53a,** node **22a,** and interface **43a.** As seen in the example illustrated by Figure **1**, a number of paths could be available depending on where the failure occurred.

In this embodiment, it takes a finite time to establish the alternate path, most of which is related to discovery of the failure. During this time, communication can be lost, and/or the QoS can be impaired. Detecting a failure is well known in the art, such as by detecting a certain number of missing sequentially numbered packets in a row.

In another embodiment, an alternate path is generated prior to detection of a fault, e.g. at the same time that the initial path is established. No data is passed on the alternate path unless a failure is detected. Upon such an occurrence, the alternate path which was already established is used.

In another embodiment, the alternate path is generated at the same time that the initial path is established. Data is passed on both paths, but in one embodiment the receiver would use the data from only one path. (Each of the two packet network endpoints need not be using data passed on the same path.) Upon detection of a failure, the receiver would switch to the alternate path.

In another embodiment, the packets are sent over both paths. The receiver examines the packets from both paths. If a duplicate packet arrives from both paths, the second copy may be discarded silently using equipment and/or software well known in the art. Duplicate packets are detected such as by comparison of packet sequence numbers and/or timestamps. This embodiment is particularly applicable when the communication involves the transmission of real-time data, such as voice, video, or other real-time data. If a packet is lost on one path but not on the other path, the QoS is not affected by delayed or missing packets. When a failure is detected on one path, that path is dropped and only the functioning path is retained. Detection of a difference between duplicate packets also can be used to enhance error detection.

In another embodiment, a similar real-time data solution is achieved through modification of the jitter buffer control routines, to receive duplicate packets via alternate paths and to discard redundant packets. In general, jitter buffer control refers to transmission rules regarding the disposition of packets. For example, there can be rules about when to discard packets and when to wait for an out-of-sequence packet to arrive.

The jitter buffer control routines affect QoS because of the real-time nature of the communication.

The embodiments discussed and/or shown in Figure **1** are examples. They are not exclusive ways to practice the present invention, and it should be understood that there is no intent to limit the invention by such disclosure. Rather, it is intended to cover all modifications and alternative constructions and embodiments that fall within the scope of the invention as defined in the following claims:

## Claims

1. A method for communicating over a local area network (LAN), the LAN including at least two independent packet network channels coupled to a first endpoint of the LAN, the method comprising:
establishing a first communication path over the LAN between the first endpoint and a second endpoint of the LAN using at least one of the packet network channels; and
establishing a second communication path over the LAN between the first and the second network endpoints using at least one different channel of the packet network channels.

2. The method as in claim 1, further comprising:
transmitting data packets between the first endpoint and a first packet switching node of the LAN via at least one of at least two independent packet based interfaces.

3. The method as in claim 1, wherein each one of at least two packet switching nodes of the LAN is coupled to the first endpoint by at least one independent packet based interface, the method further comprising: transmitting data packets via at least one of the interfaces coupled to the first endpoint.

4. The method as in claim 1, further comprising:
transmitting data packets through one of the first and second communication paths via at least one of at least two independent links coupling a first packet switching node of the LAN to a first backbone network of the LAN.

5. The method as in claim 1, wherein each one of at least two backbone networks of the LAN is coupled to a first packet switching node of the LAN by at least one independent link, the method further comprising: transmitting data packets via at least one of the links coupled to the first switching node.

6. The method as in claim 1, further comprising:
transmitting data packets through one of the first and second communication paths via a link coupling at least two backbone networks of the LAN.

7. The method as in claim 1, further comprising:
transmitting data packets through the first communication path; and
wherein the second communication path is established when a failure is detected in the first communication path.

8. The method as in claim 1, further comprising:
transmitting data packets through the first communication path; and
transmitting data packets through the second communication path if a failure is detected in the first communication path, wherein the second communication is established before the failure is detected in the first communication path.

9. The method as in claim 1, further comprising:
transmitting duplicate data packets through the first and the second communication paths, respectively.

10. The method as in claim 9, further comprising:
using data received on one of the first and the second communication paths; and
using data received on the other of the first and the second communication paths if a failure is detected in the one of the first and the second communication paths.

11. The method as in claim 9, further comprising:
examining the data packets received from both the first and the second communication paths; and
discarding a packet received on one of the first and the second communication paths which duplicates another packet received on the other of the first and the second communication paths.

12. The method as in claim 11, wherein the discarding step is performed by jitter buffer control software.

13. The method as in claim 1, wherein the communicating is between an agent station and a source of a contact in connection with an automatic contact distribution system.

14. A method for communicating over a local area network (LAN), the LAN including at least two independent packet network channels coupled to a first endpoint of the LAN, the method comprising:
establishing a first communication path over the LAN between the first endpoint and a second endpoint of the LAN using at least one of the packet network channels; and
monitoring to detect a failure in the first communication path, to determine a need to establish a second communication path over the LAN between the first and the second network endpoints.

15. The method as in claim 14, further comprising:
transmitting data packets through the first communication path; and
wherein the monitoring step comprises monitoring the data packets being transmitted through the first communication path.

16. The method as in claim 14, further comprising:
establishing a second communication path between the first and the second network endpoints using at least one different channel of the packet network channels, if a failure is detected in the first communication path; and
transmitting data packets through the second communication path.

17. A local area network, the network comprising:
a plurality of network endpoints;
at least two independent packet network channels coupled to a first endpoint of the plurality of network endpoints.

18. The network as in claim 17, further comprising: intermediate switching for connecting the first endpoint to at least one other endpoint of the plurality of network endpoints.

19. The network as in claim 17, further comprising:
intermediate switching having at least one packet switching node; and
wherein the first endpoint is coupled via at least two independent packet based interfaces to a first switching node of the at least one packet switching nodes.

20. The network as in claim 17, further comprising:
intermediate switching having a plurality of packet switching nodes; and
wherein the first endpoint provides at least one independent packet based interface to each one of at least two of the switching nodes.

21. The network as in claim 17, further comprising:
intermediate switching having at least one packet switching node and at least one backbone network; and
wherein a first switching node of the at least one switching nodes is connected via at least two independent links to a first backbone network of the at least one backbone networks.

22. The network as in claim 17, further comprising:
intermediate switching having a plurality of backbone networks and at least one packet switching node; and
wherein a first switching node of the at least one switching nodes is connected via at least one independent link to each one of at least two of the backbone networks.

23. The network as in claim 17, further comprising:
intermediate switching having a plurality of backbone networks; and
wherein at least two of the backbone networks are connected to each other.

24. The network as in claim 17, wherein the network is for communication between an agent station and a source of a contact in connection with an automatic contact distribution system.

25. The network as in claim 17, further comprising:
means for transmitting data packets through a first communication path over the network between the first endpoint and a second endpoint of the plurality of network endpoints; and
means for establishing a second communication path over the network between the first and the second endpoints if a failure is detected in the first communication path.

26. The network as in claim 17, further comprising:
means for transmitting data packets through a first communication path over the network between the first endpoint and a second endpoint of the plurality of network endpoints;
means for establishing a second communication path over the network between the first and the second endpoints before detection of a failure in the first communication path; and
means for transmitting data packets through the second communication path if the failure is detected in the first communication path.

27. The network as in claim 17, further comprising:
means for transmitting duplicate data packets respectively through first and second communication paths over the network between the first endpoint and a second endpoint of the plurality of network endpoints;
means for using data received on one of the first and the second communication paths;
means for using data received on the other of the first and the second communication paths if a failure is detected in the one of the first and the second communication paths.

28. The network as in claim 17, further comprising:
means for transmitting duplicate data packets respectively through first and second communication paths over the network between the first endpoint and a second endpoint of the plurality of network endpoints;
means for examining data packets from both the first and the second communication paths; and
means for discarding a packet received on one of the first and the second communication paths which duplicates another packet received on the other of the first and the second communication paths.

29. The network as in claim 28, wherein the discarding means comprises jitter buffer control software.
